# EUROPEAN PATENT APPLICATION

(11) **EP 4 790 029 A1**
(43) Date of publication of application: **12.08.2026**
(21) Application number: 25156557.8
(22) Date of filing: 07.02.2025
(51) Int. Cl.: C03B 5/00, C03B 5/027, C03B 5/26, F27D 3/14, F27D 11/08, F27D 11/10

(54) **ELECTRIC FURNACE FOR MELTING MINERAL MATERIAL**

(71) Applicant: ROCKWOOL A/S, 2640 Hedehusene (DK)
(72) Inventor: BOURGES, Romain, 2640 Hedehusene (DK); JOENSEN, Tórstein Vincent, 2640 Hedehusene (DK); MATHIEU, Romain, 2640 Hedehusene (DK)
(74) Representative: Gill Jennings & Every LLP

(57) **Abstract**

There is provided an electric furnace for melting mineral material to produce mineral melt suitable for forming man-made vitreous fibres (MMVF), the furnace comprising: a furnace body, configured to receive mineral material; and one or more electrodes configured to heat the mineral material to form a mineral melt and a waste metal; wherein the furnace body comprises a plurality of waste tapholes 110 for removing waste metal from within the furnace body, and one or more melt tapholes 112 for removing mineral melt from within the furnace body; and the one or more melt tapholes 112 are located above the waste tapholes 110 relative to a base of the furnace body.

## Description

### FIELD OF THE INVENTION

The invention relates to electric furnaces and methods of using these furnaces. In particular, the invention relates to electric furnaces for the production of mineral melt that is suitable for forming man-made vitreous fibres (MMVF). The invention offers furnaces with reduced energy requirements, improved safety and improved working lifespans.

### BACKGROUND

Man-made vitreous fibres (MMVF) (also commonly referred to as mineral wool) can be manufactured using a variety of different techniques. Typically, a suitable material such as rock, stone or slag is heated in a furnace until molten. This produces mineral melt, which is then centrifugally fiberised with a fiberising apparatus. The resulting fibres are collected as rock wool, stone wool, slag wool or other man-made vitreous fibres (MMVF).

When producing mineral melt by melting mineral material, waste metal such as iron is produced alongside the mineral melt. The produced waste metal must be removed from the furnace. However, this presents challenges. In particular, keeping the waste metal in liquid form, as is required for its ease of removal, is difficult. Unless the furnace is kept at a high temperature, the waste metal, which tends to be more dense than mineral melt, may sink to the bottom of a furnace and solidify on the relatively cool base on the furnace.

Furthermore, removing the waste metal from the furnace, via a taphole, causes great wear on the furnace, especially the taphole and a furnace lining around the taphole. This often necessitates replacement or repair of the taphole or furnace before other areas of the furnace are worn out, causing downtime and a reduction in output of mineral melt. In addition, damage or wear to the taphole, furnace lining or furnace body, may cause the contents of the furnace body to leak or break through to the outside of the furnace, which is very dangerous.

Accordingly, there is a need for a furnace for the production of mineral melt suitable for forming man-made vitreous fibres (MMVF) which alleviates the above problems. This needs to be achieved while maintaining the quality of the output and performance of the furnace.

### SUMMARY OF INVENTION

The invention offers furnaces suitable for the production of man-made vitreous fibres (MMVF), and methods of operating those furnaces, which have improved output, safety and energy requirements. MMVF may be referred to as mineral wool, mineral fibre, mineral cotton and includes preferred examples such as rock wool, stone wool and slag wool.

In a first aspect, there is provided an electric furnace for melting mineral material to produce mineral melt suitable for forming man-made vitreous fibres (MMVF), the furnace comprising a furnace body, configured to receive mineral material, and one or more electrodes configured to heat the mineral material to form a mineral melt and a waste metal, wherein the furnace body comprises a plurality of waste tapholes for removing waste metal from within the furnace body, and one or more melt tapholes for removing mineral melt from within the furnace body, and wherein the one or more melt tapholes are located above the waste tapholes relative to a base of the furnace body.

Waste metal removal via a taphole may cause significant wear to both the taphole and the surrounding portion of the furnace body and/or the furnace lining. This localized wear can damage the furnace body, which may repair or replacement of the furnace body. Utilizing multiple tapholes distributes wear across different areas of the furnace body, extending its lifespan, reducing maintenance needs, and enhancing output. Additionally, multiple tapholes improve operator safety by minimizing the risk of using a damaged taphole, which could lead to spillage or escape of hazardous materials.

The furnace is configured to produce mineral melts for the production of MMVF and is preferably configured to receive and melt stone, rock and slag materials which may comprise compositions with less than 75% silica by weight, and more typically will comprise between 30 and 65% silica by weight. These materials require specific temperature and energy requirements as discussed further below.

Herein, the terms temperature and temperature of the furnace are understood to refer to the temperature of the materials inside the furnace body. Equally, reference to a temperature distribution of the furnace herein is understood to refer to the distribution of temperature through the materials inside the furnace body.

The electrodes of the furnace may be electrically charged in use and be configured to heat mineral material/mineral melt through Joule heating and/or arcing. Electric furnaces may advantageously provide, when compared to alternatives, higher energy efficiency, greater control over temperature, lower emissions of greenhouse gases and other pollutants, such as particulates, and improved safety. The electrodes may be located in fixed locations, or may be movably coupled to the electric furnace and/or the furnace body and/or a support structure. The electrodes may be submerged or immersed in mineral melt, or may be at a distance from the mineral melt. The electrodes may be electrically connected to each other, and/or electrically connected to an additional electronic component, for example, a conductive lining or conductive pins, in order to provide an arcing or heating effect. The electrodes may be inserted into the melt from the top of the furnace and optionally through a roof of the furnace (if present). Alternatively, the electrodes may be inserted through a side wall of the furnace. The electrodes may be formed of any suitable materials. For example, the electrodes may comprise graphite or molybdenum.

The electric furnace may comprise an electrode control mechanism, the electrode control mechanism being configured to raise and lower the electrodes relative to the furnace body. The electrode control mechanism may comprise an electric motor, hydraulic means, pneumatic means, mechanical means, or other suitable means to move the electrodes. Alternatively, the electrodes may be mounted or fixed in a movable fashion such that they may be manually adjusted by a user or operator.

When the mineral material is heated using the electrodes, it melts and produces mineral melt and waste metal. As the waste metal has a higher density than the mineral melt, the waste metal may collect at the bottom of the furnace body.

The waste metal may comprise a single metal or may comprise a mixture of various metals or metallic elements or compounds. The waste metal may be pure, impure, alloyed, etc. Typically, the waste metal is ferrous waste metal, e.g. comprises iron. The waste metal may comprise over 90% or over 95% iron by mass. The waste metal may additionally comprise smaller amounts of other elements or materials such as sulphur, carbon, and/or phosphorus. The waste metal may comprise trace amounts of various iron oxides such as FeO, Fe₂O₃, etc. or various other metal oxides.

The furnace body comprises a plurality of waste tapholes for removing the waste metal, and one or more melt tapholes for removing the mineral melt. The tapholes may comprise holes in the side, top or base of the furnace body, through which liquid flows or can be drawn.

As the waste metal tends to have a higher density than mineral melt suitable to form MMVF, the waste metal will tend to collect at the bottom of the furnace body. Accordingly, the waste tapholes are located below the one or more melt tapholes, such that the waste tapholes may be used to remove waste metal collected at the bottom of the furnace body without incidentally also removing mineral melt. Similarly, the melt tapholes are located above the waste tapholes, such that they may be used to remove mineral melt without removing waste metal. In other words, the melt tapholes are located further from the base of the furnace body than the waste tapholes.

In some examples, the interface of the waste metal and the mineral melt within the furnace causes increased wear to the furnace body and/or a lining of the furnace body where said body or lining meets the interface, when compared to the usual wear caused by the mineral melt or waste metal alone. Further, in some examples, the removal of the waste metal through/via a waste metal taphole causes substantial wear to the waste metal taphole.

The removal of the waste metal via a waste taphole may cause substantial wear to the waste taphole and the lining surrounding the waste taphole. A waste taphole can become damaged or unusable after one or more uses, e.g. after being used one or more times to remove waste metal from the furnace. In addition, when a waste taphole is used to remove waste metal from the furnace body, wear on the furnace body/lining of the furnace body around the waste taphole, as well as the wear of the waste taphole itself, may result in a damaged or worn furnace body or furnace body lining.

Accordingly, using each taphole may cause wear and damage to the taphole and the furnace body/lining of the furnace body, necessitating replacement or repair of the furnace body. Using multiple tapholes may spread the wear between different locations around the furnace body, e.g. different sides of the furnace body. This may prolong the useful lifespan of the furnace body, delaying the need to replace the lining or the furnace body itself. This may increase the overall output of the furnace as well as reduce maintenance requirements. In addition, the provision of multiple tapholes may improve operator safety, as there is a reduced risk of a worn or damaged taphole being used, which could result in the escape, spillage or other non-confinement of dangerously hot materials.

In use, in some examples, the waste tapholes may be used to remove the waste metal before the waste metal collects to a level such that it reaches the melt tapholes.

In some examples, each of the waste tapholes are disposed in a side wall of the furnace body. In some examples, the furnace body comprises a cylindrical, prismatic shape, with an end of the prism as the base of the furnace body (e.g. such that the furnace has a circular cross section). Accordingly, the waste tapholes may be disposed in the same face of the cylinder, in different locations. Equally, the furnace body may have an oval cross section. In other examples, the furnace body is a polygonal prism, with a base of the prism as the base of the furnace body (e.g. the furnace may have a hexagonal or octagonal cross section). Accordingly, the waste tapholes may be disposed in the same side wall of the polygonal prism, or a different side walls of the polygonal prism (e.g. adjacent side walls). In other examples, the furnace body may be an arbitrary regular or irregular polyhedron. Accordingly, the waste tapholes may be disposed on the same or different faces of the regular or irregular polyhedron.

Alternatively, or in addition, each of the waste tapholes may be located at a substantially same height with respect to a base of the furnace body. For instance, the heights of the waste tapholes may be within 0.5 metres of each other, preferably within 0.2 metres of each other, more preferably within 0.1 metres of each other, more preferably within 0.05 metres of each other. In some examples, the waste tapholes are located at the same height. In such an example, the waste tapholes all being at a same first height may simplify logistical concerns related to the transfer of tapped waste metal from the furnace body.

Alternatively, a first waste taphole of the plurality of waste tapholes may be located, with respect to a bottom of the furnace body, at a first height, and a second waste taphole of the plurality of waste tapholes may be located at a second height, the first height being different to the second height.

In some examples, the electrodes are adjustably coupled to the furnace body, such that the electrodes may be raised or lowered with respect to a base of the furnace body. For instance, the furnace may be configured such that the electrodes may be moved between two or more predetermined heights within the furnace body. In such configurations, it may be possible to at least partially immerse the electrodes in the produced mineral melt. Further, adjusting the position of the electrodes may allow for more selective heating, for instance, heating a portion of the mineral material, mineral melt, and/or waste metal more intensely by positioning the electrodes closer to said portion. As discussed above, the furnace may comprise an electrode control mechanism configured to raise and lower the electrodes relative to the furnace body. However, in further examples the electrodes and furnace may be configured such that the electrodes may be raised or lowered manually.

Preferably a centreline of each waste taphole of the plurality of waste tapholes is located within an angular range of less than or equal to 120 degrees with respect to a central axis of the furnace body, preferably less than or equal to 90 degrees, more preferably less than or equal to 60 degrees. The angular range defines a sector of the furnace body in which all waste tapholes are located. In other examples, the waste tapholes may be arranged on the furnace body without correspondence to each other, that is, arranged independently and positioned anywhere on the furnace body.

Preferably, the centreline of each of the plurality of waste tapholes may be located at most 120 degrees from the centreline of each of the remaining tapholes within the plurality of waste tapholes with respect to a central axis of the furnace body, preferably at most 90 degrees, more preferably at most 60 degrees, said axis perpendicular to the base of the furnace body.

The central axis preferably extends in a vertical direction. Where the base of the furnace body is flat, or relatively flat, the central axis may be arranged perpendicular to the base of the furnace body. The central axis typically extends through the centroid of the cross-section of the internal cavity and/or furnace body.

Alternatively, or in addition, each of the plurality of waste tapholes is preferably located at most 4 metres from each of the remaining tapholes within the plurality of waste tapholes, preferably at most 3.5 metres, more preferably at most 3 metres. Such a distance be measured directly, or circumferentially, i.e. around a circumference of the furnace body. Alternatively, the distance may be measured as a geodesic on the furnace body.

Locating the waste tapholes relatively close to each other may allow for the simplification of logistical concerns related to removing the waste metal. For instance, it may be possible to share troughs, pits or other means for waste metal transport between waste tapholes if said waste tapholes are located sufficiently close to each other.

Additionally, or alternatively, each waste taphole may be located at least 5 degrees from the nearest waste taphole and/or the nearest melt taphole with respect to a central axis of the furnace body, preferably at least 10 degrees, more preferably still at least 15 degrees. Additionally, or alternatively, each waste taphole may be located at least 0.2 metres from the nearest waste taphole and/or the nearest melt taphole with respect to a central axis of the furnace body, preferably at least 0.5 metres, more preferably still at least 1 metres. Providing sufficient distance between the tapholes helps spread wear across different sections of the side walls.

Preferably each of the one or more melt tapholes is located at least 0.1 metres above, with respect to a base of the furnace body, each waste taphole of the plurality of waste tapholes. In preferable examples, each of the one or more melt tapholes is located at least 0.3 metres above the waste tapholes. In more preferable examples, each of the one or more melt tapholes is located at least 0.5 metres above the waste tapholes. In other words, each of the one or more melt tapholes is at least 0.1 metres, preferably 0.3 metres, more preferably 0.5 metres, further away from the base of the furnace body than any of the waste tapholes. Accordingly, there is a distance of at least 0.1 metres, preferably 0.3 metres, more preferably 0.5 metres, between a melt taphole and a waste taphole. The separation of the melt tapholes and waste tapholes may ensure that the waste tapholes tap only waste metal, as the waste metal is collected at the bottom of the furnace.

Preferably, each waste taphole is offset from each of the one or more electrodes relative to the centreline of the furnace. That is, preferably there is no combination of a waste taphole and an electrode that are aligned relative to the centreline of the furnace. In other words there is preferably no combination of a waste taphole, the centre of the furnace and an electrode that are arranged along a straight line, with the electrode being positioned between the waste taphole and the centre of the furnace. Of course, in some examples, there is no such placement restriction, and the waste tapholes may be placed aligned with or proximal to the electrodes.

Preferably each waste taphole of the plurality of waste tapholes is located at least 20% of the radius of the furnace, preferably 30% of the radius of the furnace, more preferably 50% of the radius of the furnace, from each electrode of the one or more electrodes.

Wear on the lining and walls of the furnace body may be increased local to an electrode (e.g. due to the increased temperatures and/or movement of melt under convention local to the electrode). Ensuring adequate separation between the waste tapholes and the electrodes of the furnace helps to reduce wear on each taphole and increase the lifespan and safety of the furnace.

In some examples, the furnace body has a substantially circular cross section, and the electrodes are not located centrally with respect to the cross section. In such an example, the centreline of each of the plurality of waste tapholes may be located at least 10 degrees from the nearest electrode, with respect to a central axis of the furnace body, preferably at least 15 degrees, more preferably at least 20 degrees,

As discussed, it is desirable to reduce the energy requirements of a furnace. However, the inventors have recognised that if energy input is simply reduced and the overall temperature of the furnace reduced, the relatively dense waste metal which collects at the base of the furnace may solidify on the relatively cool furnace base, preventing its tapping.

Accordingly, in some examples, the electric furnace is configured to produce mineral melt suitable for forming man-made vitreous fibres (MMVF) in a normal operating mode and to prepare the waste metal for removal in a waste removal mode; wherein in the normal operating mode the furnace is configured to heat the mineral material to form mineral melt and waste metal from the mineral material, such that the waste metal collects at a base of the furnace body, and in the waste removal mode the furnace is configured to heat the collected waste metal to decrease the viscosity of the collected waste metal relative to the viscosity of the collected waste metal in the normal operating mode.

Hence the electric furnace is configured to operate in a normal operating mode and in a different waste removal mode. The provision of two operating modes, the normal operating mode and the waste removal mode, may allow the furnace to be operated at a plurality of distinct temperatures and/or temperature distributions. For instance, when in the normal operating mode, the furnace may be operated at a lower temperature (in other words, the temperature of the furnace may be lower, i.e. the temperature of the materials inside the furnace body may be lower) than in a waste removal mode. Operating the furnace at a lower temperature may reduce energy consumption and reduce wear on components of the furnace, for instance, walls, lining, bricks, coating or other components of the furnace body, the waste tapholes, the melt tapholes and/or the electrodes.

In some examples, in the normal operating mode, the furnace is operated at a temperature or temperature distribution that is sufficiently high that the input mineral material may be melted to form a mineral melt, but low enough that waste metal collects at the base of the furnace body in solid form. For instance, noting that the temperature distribution through a furnace may not be uniform, in such an example, the temperature relatively close to the electrodes of a furnace operating in the normal operating mode may be above the melting point of the metal and/or mineral material whereas the temperature relatively far from the electrodes (e.g. close to the base of the furnace) may be lower than the melting point of the metal. Indeed, generally it should be understood that there may be a temperature gradient or differential inside the furnace body and that the temperature may be higher closer to the electrodes, and lower further from the electrodes.

In some examples, in the waste removal mode, the furnace is configured to operate such that the waste metal is liquified (i.e. transitions from a solid state to a liquid state). In other examples, in the waste removal mode, the furnace is configured to raise the temperature of the collected waste metal, such that the viscosity of the collected waste metal is reduced, i.e. the liquidity of the collected waste metal is increased and/or the resistance to flow of the collected waste metal is reduced. In such examples, the waste metal may not necessarily be in a solid form in the normal operation mode, but may have a higher viscosity than in the waste removal mode.

These processes may involve operating the furnace at a sufficient temperature to liquify the waste metal. Alternatively, or in addition, the electric furnace may be configured to move the electrodes closer to the waste metal, in order to raise the temperature of the waste metal. This may comprise lowering the electrodes with respect to a bottom of the furnace body, such that the electrodes are positioned closer to the collected solid waste metal. In such an example, the temperature of the collected solid waste metal may be raised above its melting point without necessarily raising the temperature throughout the furnace body above the melting point of the waste metal.

In other words, the furnace may be configured to move from the normal operating mode to the waste removal mode by increasing a power supplied to the electrodes, and/or by lowering the electrodes with respect to a bottom of the furnace body, such that the electrodes are positioned closer to the collected solid waste metal.

The furnace may comprise a furnace controller configured to change mode of operation of the furnace from the normal operating mode to the waste removal mode, and from the waste removal mode to the normal operating mode. For instance, the furnace controller may be configured to control the power supplied to the electrodes, and/or the height of the electrodes with respect to a bottom of the furnace body.

In some examples, the furnace is further configured to move from the normal operating mode to the waste removal mode when an amount of waste metal and/or mineral melt collected in the furnace is greater than a threshold. Such thresholds may be chosen such that the waste metal collected at the bottom of the furnace body does not reach the melt tapholes. Alternatively, or in addition, the threshold may be selected empirically. The furnace may be configured to move from the normal operating mode to the waste removal mode automatically, although this is not essential.

Alternatively, or in addition, the predetermined time period may be chosen such that the waste metal does not form a body, such as a unitary solid body, and cool substantially below the melting point of the waste metal. If the predetermined time period is too short, the tapping is performed frequently, causing downtime and loss of efficiency, as well as unnecessary wear to the furnace. However, if the tapping is performed too infrequently, the waste metal can solidify fully and cool to form a large volume of solid metal. Such a volume, once allowed to cool significantly below its melting point, may be difficult to melt again using the electrodes of the furnace.

Alternatively, or in addition, the furnace may be configured to move from the normal operating mode to a waste removal mode after a predetermined time period. The predetermined time period may be time operating in the normal operating mode, or simply a time period. Such a time period may be chosen to minimise wear or damage to components of the electric furnace, such as the walls, lining, bricks or coating of the furnace body, the waste tapholes, the melt tapholes and/or the electrodes. Alternatively, the time period may be chosen based upon the rate of production of waste metal in the normal operating mode.

Preferably the predetermined time period is in the range from 3 to 60 days, preferably 5 to 45 days, more preferably 7 to 30 days, more preferably still 10 to 20 days. Maintaining a relatively long gap between the tapping of waste metal - e.g. every one or two weeks rather than continuous tapping or tappings each day or every few days - offers significant improvements to the safety, long-term output and lifespan of a furnace. The interface between the waste metal collected at the base of a furnace and the overlying mineral melt is particularly corrosive to the lining of a furnace and is more corrosive than areas where the metal or mineral melt are present on their own. Assuming waste metal is tapped continuously or very frequently, and mineral material is consistently provided to the furnace, the position of this interface will remain constant (or nearly constant) as newly formed metal replaces the removed metal. Therefore, the lining of the furnace local to the waste metal - mineral melt interface will be worn away quickly, leading to a safety concerns and necessitating maintenance. In contrast, if the waste metal is tapped relatively infrequently (e.g. every one week, two weeks or more) the amount of waste metal in the furnace will slowly build between tappings. As such, the interface between the waste metal and mineral melt will rise up the side walls of the furnace. As such, the highly corrosive effect of the interface will be spread across a greater height of the furnace walls, spreading the wear across a greater surface of the furnace and reducing the frequency at which maintenance is required.

According to a second aspect, there is provided a method of operating an electric furnace according to the preceding aspect to produce mineral melt suitable for forming man-made vitreous fibres (MMVF), the method comprising: introducing mineral material to the furnace; heating the mineral material to form mineral melt and waste metal; removing said waste metal, wherein said waste material is removed through two or more waste tapholes of the plurality of waste tapholes simultaneously, or through one or more of the waste tapholes sequentially.

The method offers corresponding benefits to the furnaces discussed above. Moreover, the method may be performed using and of the optional and preferably steps discussed above, or using a furnace comprising any of the features and advantages discussed above in relation to the preceding aspect of the invention.

The provision of multiple waste tapholes enables the useful lifetime of the electric furnace or the lining of the electric furnace to be extended, as, wear may be spread between the plurality of tapholes. For instance, when one waste taphole is worn or damaged, a different waste taphole can be used to remove the waste metal. Equally, usage and wear may be balanced between the different waste tapholes. Accordingly, the method may further comprise, when removing the waste metal in a waste removal mode, selecting a least-worn taphole from the plurality of waste tapholes, wherein removing the waste metal is removal via the selected taphole. The wear of the taphole may be measured or observed directly from the tap hole. Alternatively, the wear may be estimated based on the number of times each taphole has been used to remove waste metal or the amount (e.g. mass or volume) of waste metal that has been removed through said taphole. Alternatively, or in addition, the method may further comprise selecting a taphole based on a taphole order. In some examples, the taphole order may be preselected. In some examples, the taphole order may any regular sequence of tapholes, or any repeating sequence of tapholes. In some examples, the tapholes may be assigned labels or indices, and the order defined in terms of an order of labels or indices. In some examples, the tapholes may be selected in an alternating order, for instance, tapping first using a first waste taphole, then, the next time the waste metal is removed, using a different second waste taphole, then, the next time the waste metal is removed, using the first waste taphole, then, the next time the waste metal is removed, using the second waste taphole, etc.

In still further examples the waste metal may be removed through multiple waste tapholes (e.g. some or all of the waste tapholes) simultaneously. In such examples, the tapholes may still be chosen in an alternating or ordered manner.

In particularly preferred examples, removing said waste metal comprises removing the waste metal in a series of separate tappings, wherein the waste taphole or waste tapholes used to remove waste metal are changed: after a predetermined number of tappings have been performed; after a predetermined amount of time has elaspsed; after a predetermined amount of waste metal has been removed from the furnace; according to a predetermined taphole order; and/or based on detected or estimated wear of the waste tapholes. By separate tappings it will be understood that the removal of waste metal is paused or stopped between the tappings, and that each tapping is discrete from the previous and subsequent tapping. For example, the taphole or tapholes may be changed after each tapping such that the taphole(s) are alternated, or after every 2, 3, or 5 tappings. As such, the predetermined number of tappings required to trigger a change in the tapholes may be in the range from 1 to 5. Similarly, the taphole or tapholes used for tapping waste metal may be changed after a every 15, 30, 60 to 90 days (e.g. after a predetermined period in the range from 15 to 90 days). The predetermined amount of waste material may be defined based on a weight or volume of waste metal removed from the furnace. As mentioned above, a taphole order may be preselected. In some examples, the taphole order may any regular sequence of tapholes, or any repeating sequence of tapholes. Therefore, the taphole or tapholes used to remove waste metal may be consistently or regularly changed to ensure wear is effectively spread between them.

In alternative example, waste metals could be removed continuously or substantially continuously from the furnace through the tapholes. The tapholes used for removing the waste metals could be varied without a pause in the process of removing (discharging) waste metal.

In some examples, the temperature or temperature distribution of the furnace, i.e. the temperature or temperature distribution inside the furnace body, may be maintained at a sufficiently high level that some or all of the waste metal is collected in liquid form. Alternatively, in some examples, the temperature inside at least a portion of the furnace body may be sufficiently low that some of the waste metal is collected in solid form. Such a portion may be located at the bottom of the furnace body, where the waste metal is collected.

In some examples, the method may further comprise: producing mineral melt in a normal operating mode, comprising heating the mineral material to form mineral melt and waste metal, wherein the waste metal collects at a base of the furnace body; and removing the waste metal in a waste removal mode, comprising: heating the collected waste metal, such that the waste metal is a liquid; and removing said waste metal via one or more waste tapholes of the plurality of waste tapholes.

In one example, in the normal operating mode, the waste metal collects at the base of the furnace body in a solid state, and in the waste removal mode, heating the collected waste metal liquifies said waste metal. In such examples, the power consumed by the electric furnace may be reduced, as the power supplied to the electrodes reduced as compared to maintaining the waste metal in liquid form in the normal operating mode and/or during production of mineral melt. Of course, in other examples, the waste metal may be liquid in the normal operating mode, may be liquid in some places in the furnace body in the normal operating mode (due to the temperature gradient in the normal operating mode, as discussed above), or may be partially solid in the normal operating mode.

In some examples, the method further comprises moving from the normal operating mode to a waste removal mode when an amount of waste metal collected is greater than a threshold; or moving from the normal operating mode to the waste removal mode after a predetermined time period, as discussed above.

In some examples, moving from the normal operating mode to the waste removal mode comprises increasing a power supplied to the electrodes, as discussed above. In some examples, the power is increased proportionally, such as by 5%. In some preferable examples, the power may be increased by a proportion in the range from 5% to 50%. Alternatively, or in addition, the power is increased by an absolute value, for instance, by 0.5 megawatts. In some preferable examples, the power may be increased by an amount in the range from 0.5 megawatts and 5 megawatts.

In some examples, the electrodes of the electric furnace are movably coupled to the furnace body, and moving from the normal operating mode to the waste removal mode comprises lowering the electrodes with respect to a base of the furnace body, such that the electrodes are positioned closer to the collected solid waste metal, as is discussed above. The electric furnace may comprise an electrode control mechanism, the electrode control mechanism being configured to raise and lower the electrodes. The electrode control mechanism may comprise an electric motor, hydraulic means, pneumatic means, mechanical means, or other suitable means to move the electrodes. Alternatively, the electrodes may be mounted or fixed in a movable fashion such that they may be manually adjusted by a user or operator. Alternatively, an electrode control mechanism may be provided separately to the electric furnace or the furnace body.

Moving from the normal operating mode to the waste removal mode may comprise increasing the temperature of the contents of the furnace (e.g. the mineral melt and/or the waste metal) from a normal operating temperature, which is typically at least 1400 degrees Celsius and more commonly is at least 1600 degrees Celsius for the mineral melt, to a waste removal temperature. The waste removal temperature may be in the range from 50 to 300 degrees Celsius hotter than the normal operating temperature and preferably in the range from 50 to 200 degrees Celsius hotter than the normal operating temperature.

In some examples, the method further comprises removing at least a portion of the mineral melt via a melt taphole of the electric furnace; and producing man-made vitreous fibre, MMVF, using the portion of mineral melt.

For instance, the method may involve by forming a mineral melt using the furnace system as above, removing mineral melt via a melt taphole, fiberising the mineral melt using any suitable fiberising device and collecting the fibres.

Preferably the mineral material introduced to the electric furnace comprises at least one of rock, stone or slag. The method may comprise producing mineral melts that are suitable to form rock, stone or slag wool.

It may be further appreciated that the approach of operating furnaces is separate normal operating modes and waste removal modes may also be applied to furnaces comprise one, two or more waste tapholes.

As such, in further aspects may be provided methods of operating furnaces comprising one or more waste tapholes, the methods comprising introducing mineral material to the furnace; heating the mineral material to produce mineral melt and waste metal, and removing said waste through the one or more waste tapholes, and wherein the method comprises heating the mineral material to form mineral melt and wherein the waste removal mode comprises heating the collected waste metal such that the waste metal is a liquid and removing said waste metal via one or more waste tapholes of the plurality of waste tapholes. Equally, in further aspects there may be provided furnaces comprising a furnace body configured to receive mineral material, and one or more electrodes configured to heat the mineral material to form a mineral melt and a waste metal, wherein the furnace body comprises one or more waste tapholes for removing waste metal from within the furnace body, and one or more melt tapholes for removing mineral melt from within the furnace body, wherein the one or more melt tapholes are located above the one or more waste tapholes relative to a base of the furnace body, and wherein said furnace is configured to produce mineral melt suitable for forming man-made vitreous fibres (MMVF) in a normal operating mode and to prepare the waste metal for removal in a waste removal mode, wherein in the normal operating mode the furnace is configured to heat the mineral material to form mineral melt and waste metal from the mineral material, such that the waste metal collects at a base of the furnace body, and in the waste removal mode the furnace is configured to heat the collected waste metal to decrease the viscosity of the collected waste metal relative to the viscosity of the collected waste metal in the normal operating mode. In the waste removal mode, the less viscous and more flowable waste metal may be removed from the furnace via the one or more waste tapholes. Said methods and furnaces with one or more waste tapholes may comprise any of the preferable or optional features discussed with reference to the preceding aspects of the invention, and offer corresponding benefits.

It should be understood that any features described with respect to any aspect are intended to be understood as applicable, wherever possible, to any of the other aspects.

### BRIEF DESCRIPTION OF DRAWINGS

An example apparatus and method are described herein with reference to the accompanying figures, in which:
Figure 1 shows in schematic cross section of a furnace in accordance with the invention;
Figure 2 shows in schematic cross section of a furnace in accordance with the invention;
Figure 3 shows in schematic plan view of a furnace in accordance with the invention;
Figure 4 shows in schematic plan view of a furnace in accordance with the invention;
Figure 5 depicts a diagrammatic representation of an example method in accordance with the invention; and
Figure 6 depicts a diagrammatic representation of an example method in accordance with the invention.

### DETAILED DESCRIPTION

The electric furnaces discussed herein are configured to receive and melt a material that has a high electrical and low electrical conductivity. This is typical of melts such as rock, stone and slag melts suitable for forming man-made vitreous fibers (MMVF) such as rock wool, stone wool and slag wool. Thus, the furnaces discussed herein can be contrasted with those used in the metals industries. In particularly preferred examples, electric furnace systems are configured to supply immersed electrodes with a (relatively low) current of less than 60 kA (60000 Amps), a (relatively high) voltage in the range of 50 to 1000 V, typically between 150 and 450 V, and/or to handle mineral melt with an impedance of less than 50 mΩ (0.05 Ohms), typically between 10 to 45mΩ, and preferably between 20 to 30 mΩ. The furnaces may operate in a high resistive mode. The furnaces may generate low quantities of metal products.

The furnace systems discussed herein may be configured to produce internal furnace temperatures herein that are high, for example, more than 1400 degrees Celsius. These high temperatures may be required for melting rock, stone, or slag material. The furnace may be provided with thick outer walls and/or a cooling system, in order that the furnace and its surroundings are not damaged during use at such temperatures.

Mineral melt referred to herein may include stone melt, rock melt, or slag melt. This mineral melt may comprise raw materials including mineral fibres and mineral fines or powders. The raw materials may be nonmelted, melted, or partially melted, for example, depending on the stage of the furnace melting process.

Furnaces herein may be suitable for mineral fibres of less than 1 mm in length. Furnaces herein may be suitable for a wide range of fibre lengths, for example from 0.5 to 40.0 mm. Each of these properties may be particularly prevalent in recycled mineral material, and thus embodiments herein may allow for the melt material to comprise a large proportion of recycled material.

The furnaces and methods discussed herein may be used within wider systems and methods that produce man-made vitreous fibres (MMVF). The mineral melt may be continuously or periodically discharged (e.g. tapped) from the furnaces and formed into MMVF using known methods (e.g. fiberisation). For instance, the mineral melt may be formed into stone fibres, rock fibres, slag fibres, glass fibres, glass wool, ceramic fibres, basalt fibres, and others. The mineral fibres may be formed as a wool product such as rock, stone or slag wool.

In particular the furnaces and methods described herein may be used as part of a wider process to produce MMVF with the following levels of elements, calculated as oxides in mass percentages: SiO₂, at least 30, 32, 35 or 37 % and/or not more than 51, 48, 45 or 43 %; Al₂O₃, at least 12, 16 or 17 %, and/or not more than 30, 27 or 25 %; CaO, at least 8 or 10 %, and/or not more than 30, 25 or 20 %; MgO, at least 2 or 5 % and/or not more than 25, 20 or 15 %; FeO and Fe₂O₃, at least 4 or 5 %, and/or not more than 15, 12 or 10; FeO+MgO, at least 10, 12 or 15 %, and/or not more than 30, 25 or 20 %; Na₂O+K₂O, 0 or at least 1 %, and/or not more than 10; CaO+MgO, at least 10 or 15 % and/or not more than 30 or 25 %; TiO₂, 0 or at least 1 %, and/or not more than 6, 4 or 2 %; TiO₂+FeO, at least 4 or 6 %, and/or not more than 18 or 12 %; B₂O₃, 0 or at least 1 %, and/or not more than 5 or 3 %; P₂O₅, 0 or at least 1 %, and/or not more than 8 or 5; and other oxides at 0 or at least 1 % and/or not more than 8 or 5 %. The furnaces and methods described herein may be used as part of a wider process to produce stone fibres that comprise any or all of the following components in the following ranges of mass percentages: SiO₂, at 30 to 51%; Al₂O₃, at 12 to 25%; CaO, at 8 to 30%; MgO, at 2 to 25%; iron oxides (FeO and Fe₂O₃), at 2 to 15%; Na₂O and/or K₂O, at less than 10%; and CaO and/or MgO, at 10 to 30%. The furnaces and methods described herein may be used as part of a wider process to produce glass fibres that comprise the following oxides, in percent by mass: SiO₂, 50 to 70 %; Al₂O₃, 10 to 30 %; CaO, not more than 27 %; MgO, not more than 12 %. Some glass fibres can also contain the following oxides in percent by weight: Na₂O+K₂O 8 to 18 %, and in particular Na₂O+K₂O in greater amounts by mass than CaO+MgO; B₂O₃, 3 to 12 %; and/or less than 2%.

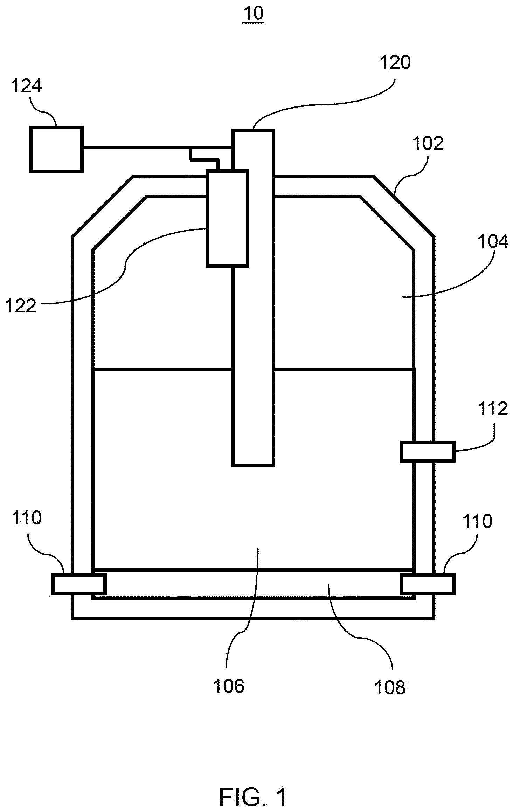

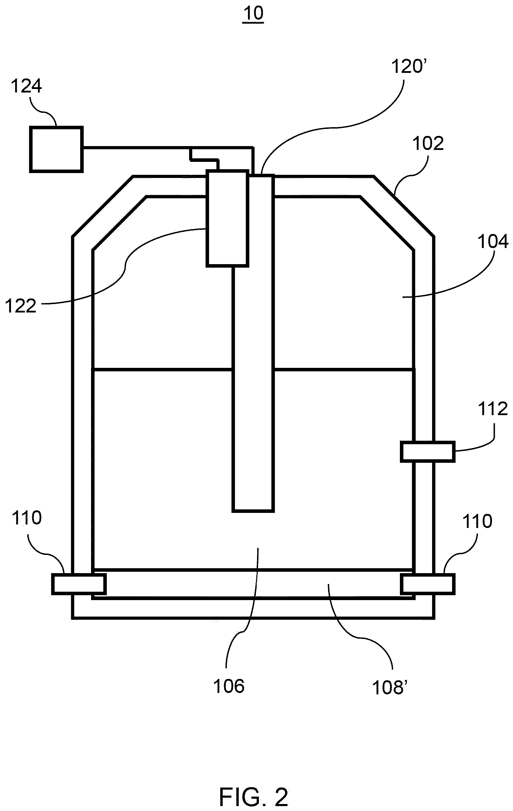

In particular, Figures 1 and 2 provide schematic representations of an example furnace 10 in accordance with the present invention. These figures depicts an Electric Arc Furnace (EAF), more specifically, a Submerged Arc Furnace (SAF). In other examples, other types of furnace or arc furnace may be used. In Figure 1 the electric furnace 10 is depicted in an arrangement corresponding to a normal operating mode. Meanwhile, in Figure 2, the electric furnace 10 is shown in an arrangement corresponding to a waste removal mode.

The electric furnace 10 comprises a furnace body 102, and within the furnace body 102 is a cavity 104. Contained within the cavity is a mixture 106 of mineral melt and mineral material, and waste metal 108, collected at the bottom of the cavity in the furnace body. It should be noted that, in some examples, the mixture 106 contains unmelted mineral material, mineral melt and waste metal, for instance, when the mineral material has been recently added to the furnace. Over time, the application of heat via the electrode will melt the mineral material to produce mineral melt, and the waste metal will sink to the bottom of the furnace.

In an example, the mixture 106 may comprise mineral material in the form of basalt and slag, which is heated by the electrode 120 in a normal operating mode. Heating the mineral material causes it to melt, producing mineral melt and waste metal, which, in this example, comprises metallic iron and iron oxides of various kinds. This waste iron is more dense than the mineral melt, and accordingly, sinks to the bottom of the furnace.

The walls of the furnace body comprise at least two waste tapholes 110 and a melt taphole 112. The electric furnace 10 further comprises one or more electrodes an electrode control mechanism 122. As shown in Figures 1 and 2 the electric furnace 10 further comprises a single electrode 120 but this is not essential. In further examples the electric furnace 10 may comprise two, three or more electrodes 120.

As shown, the at least two waste tapholes 110 are located on opposing sides of the furnace 10. However, this is not essential, and in further examples waste tapholes may be located on relatively close to one another, or on the same or adjacent sides of a furnace 10, such that metal removed via each taphole may be handled by the same waste handling device.

In this example, the waste tapholes are positioned at the same height as each-other. This provides benefits when removing the waste metal, simplifying logistical concerns related to transporting the waste metal. In other examples, the waste tapholes may be positioned at substantially the same height (e.g. within some tolerance of each other, for example, 0.1 metres), or may be positioned at different heights. In this example, the waste tapholes are located 0.5 metres below the melt taphole. Separating the melt tapholes from the waste tapholes in this manner ensures that the waste tapholes tap waste metal, which accumulates at the bottom of the furnace, and that the melt tapholes tap the mineral melt.

The furnace 10 further comprises a furnace controller 124 configured to control the operation of the furnace 10. The furnace controller 124 is configured to control the power supplied by the electrode(s) 120 and the positioning of the electrodes 120 relative to the furnace body 102. Thus, the furnace controller 124 may issue instructions or control power supplied to the electrodes 120 and the electrode control mechanism 122. The furnace controller is configured to change the operation of the furnace 10 from a normal operating mode shown in Figure 1 to a waste removal mode shown in Figure 2.

In a normal operating mode, close to the electrode 120, the temperature may be maintained above the melting point of iron, and accordingly, at least some of the waste metal is in liquid form near the electrode. In this example, the temperature close to the electrode is maintained at a temperature of at least 1600 degrees Celsius. Of course, in other examples, other operating temperatures may be chosen.

However, further away from the electrode the temperature may be lower than the melting point of iron. In particular, the walls and base of the furnace body tend to be of a lower temperature than the mineral melt 106 close to the electrodes 120. In this example, the temperature at the walls and base of the furnace body can be approximately 1400 degrees Celsius in the normal operating mode. As such, waste metal 108 collected near the base of the furnace body may cool and solidify. Of course, in other examples, the temperature may be different, and the waste metal may be maintained as a liquid throughout the furnace body.

Figure 2 depicts a schematic representation of the example furnace 10 of Figure 1, when the furnace 10 is in a waste removal mode. In this example, the electrode 120' has been lowered to bring it closer to the collected waste metal 108', which is now in a liquid form. Additionally, the power supplied to the electrode 120' is increased with respect to the electrode 120 of Figure 1. This increases the temperature of the waste metal 108' to above the melting point of the waste metal. In this example, the temperature in the waste removal mode is between 50 and 200 degrees Celsius above the equivalent temperature in the normal operating mode. The waste metal can be removed via waste tapholes 110, disposed on opposite sides of the furnace, though, in some examples, the waste tapholes are disposed closer together.

As mentioned, changing the furnace from its normal operating mode (a first operating mode) to its waste removal mode (a second operating mode) may comprise moving the electrode 120, 120' closer to the collected waste material and increasing the power supplied to the electrode 120, 120'. However, in further examples the operation mode of the furnace may be varied by one or more of: changing the position of the electrode(s) 120, 120'; and changing the power supplied to the electrode(s) 120, 120'. Each of these steps change the temperature and/or temperature distribution through the furnace 10.

As mentioned, the furnace 10 comprises a furnace controller 124 configured to change the operating mode of the furnace. The furnace controller 124 may automatically change the power supplied to the electrode(s) 120, 120', and/or the positioning of the electrode(s) 120, 120'. However, this is not essential and in further examples these parameters and features may be controlled by other means - e.g. directly or manually by an operator.

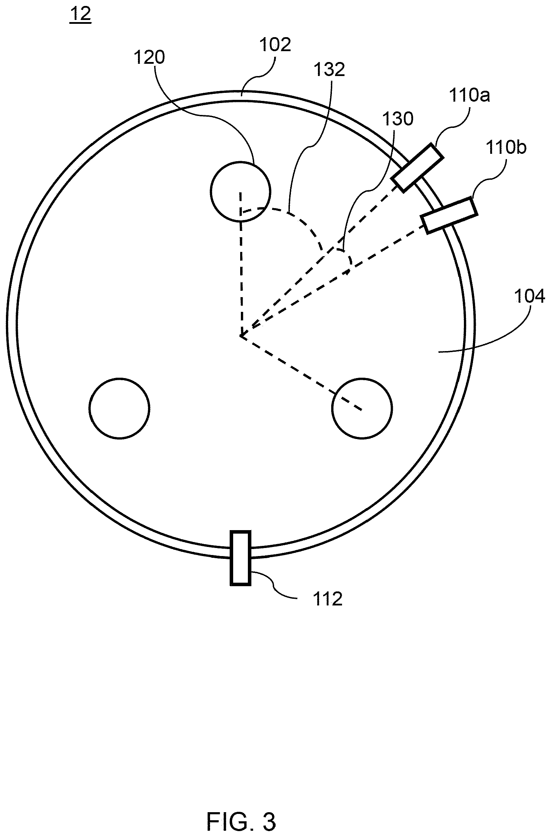

Figure 3 depicts a schematic representation of a system comprising a furnace in accordance with the present invention. The furnace 12 is depicted in a top-down or "plan" view. The furnace 12 may comprise any of the features of the furnace 10 shown in Figures 1 and 2 and offer corresponding benefits. Where not otherwise specified, the reference numerals in Figure 3 are intended to have the same meaning as the corresponding reference numerals in Figure 1.

The furnace 12 has a circular cross section (plan). However, this is not essential and in further examples furnaces may have an oval or hexagonal shape. The furnace 12 comprises three electrodes 120, spaced equidistantly from each other around the center of the furnace (i.e. at 120 degrees separation relative to one another). In other examples, there may be one, two, four, or any other number of electrodes.

There are two waste tapholes 110a, 110b, located a short distance from each other. Each waste taphole 110a, 110b is located such that it is offset from each of the electrodes 120 relative to the centreline of the furnace 12. In other words, in this example, the electrodes 120 are not arranged along a line defined between each waste taphole 110a, 110b and the centreline of the furnace 12 (though, of course, in other examples, the electrodes may be arranged in a different manner, including in an arrangement aligned with the electrodes). In this way, additional wear caused by the presence of the electrodes is minimized on the waste tapholes. As the removal of waste metal causes wear to both the taphole and the surrounding elements of the furnace body, keeping an additional source of wear (the electrodes) relatively far from the tapholes extends the useful life of the furnace body.

The furnace also comprises a melt taphole 112 for removing melt, located approximately 120 degrees from the two waste tapholes. However, this is not essential and in further examples the melt taphole 112 may be aligned with one or more of the waste tapholes 110a, 110b or a centreline defined between the waste tapholes 110a, 110b. Of course, in other examples, the melt taphole and the waste tapholes may be arranged in any location on the furnace body.

In more detail, it will be seen that the waste tapholes 110a, 110b are separated by an angle 130 with respect to a central axis of the furnace 12. The angle 130 is approximately 20 degrees, placing the two waste tapholes 110a, 110b in relative proximity to each other. In other examples, the angle 130 may be less than or equal to 120 degrees, or less than or equal to 90 degrees, or less than or equal to 60 degrees. Additionally, or alternatively, the angle 130 may be at least 5 degrees, at least 10 degrees, or at least 15 degrees. The proximity of the waste tapholes 110a, 110b simplifies removing the waste metal, as the waste metal removed from each taphole may be handled by the same handling device (as is discussed below). Further, in some examples, the relative proximity of the waste tapholes enables the locating of the electrodes relatively far from all of the waste tapholes.

Waste taphole 110b is separated from the nearest electrode 120 by an angle 132. This angle 132 is approximately 45 degrees, though in other examples it may be less than or equal to 120 degrees, less than or equal to 90 degrees, or less than or equal to 60 degrees. As discussed, electrodes may cause additional wear to the furnace body and/or the lining of the furnace body local to their position. Separating the tapholes from the electrodes helps avoid the rapid erosion that could be caused by a combination of this effect with the wear caused removal of waste metal through a taphole. This may extend the useful life of the furnace body and/or the lining of the furnace body. In other examples, an electrode may be located centrally in the furnace body and there may still be a significant separation between the electrode and the waste tapholes without there being an angular separation as in the present example.

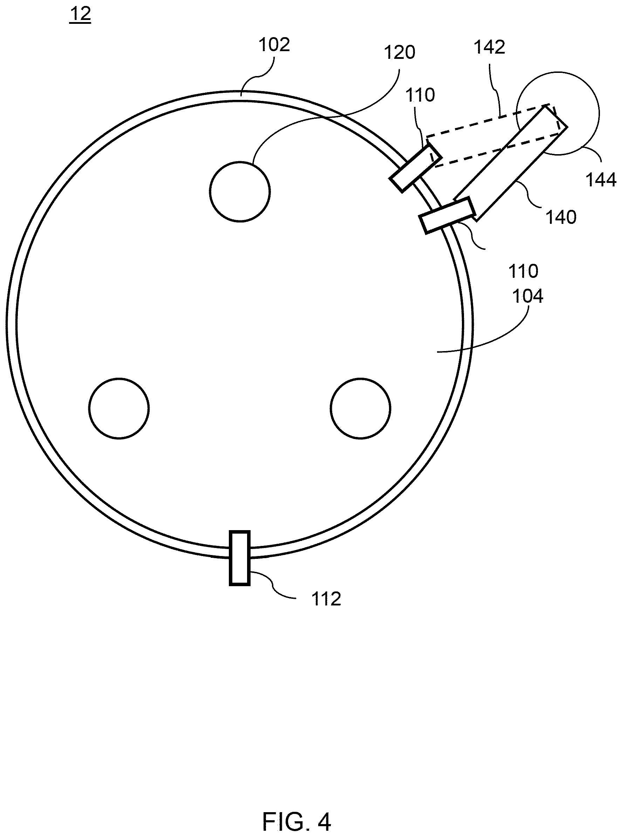

Figure 4 depicts a schematic representation of the system of Figure 3, with the addition of an optional waste metal handling device. This device comprises a trough 140, which is movable between a first position (as shown) and a second position 142. In other examples, the waste metal handling device may comprise a gutter or other means of collecting waste metal. For example, a fixed gutter may be positioned beneath both waste metal tapholes 110a, 110b. In some examples, the waste metal may flow directly into a waste metal receptacle.

The trough is configured to transport liquid waste metal flowing from the waste tapholes 110 into a waste metal receptacle 144 (e.g. a pit). In other examples, the waste metal may not be flowing from the waste taphole, but may be extracted, optionally by mechanical means, or by creating of a pressure differential, or by any other appropriate means.

In some examples, there may be a trough mechanism configured to move the trough between a plurality of trough positions, the mechanism being mechanical, pneumatic, hydraulic, electronic, or any other appropriate mechanism. In the present example, the trough is configured to be movable and further configured to be moved between the two positions manually, which may be by an operator.

In all of the furnaces 10, 12 depicted in Figures 1 to 4, there is provided a plurality of waste tapholes. When using these waste tapholes to remove waste from the furnace body, the waste tapholes may be used simultaneously, individually, in sequence, or in any arbitrary combination. In these examples, the tapholes are used in an alternating sequence. For example, in the case of Figure 3, a first waste taphole 110 is used to remove waste metal from the furnace, the waste metal flowing into the trough 140 and subsequently into the waste metal receptacle 144. Once an amount of waste metal has been removed, typically all the waste metal which flows from the waste taphole (though, of course, any quantity less than or equal to the amount of waste metal in the furnace can be removed), the first waste taphole is covered and sealed with a taphole cover. Subsequently, when the waste metal is next to be removed, in this case due to the passing of a predetermined time period, a second waste taphole 110, different from the first waste taphole, is used to remove the waste metal. In other examples, when to remove the waste metal is determined based upon the amount of waste metal produced.

In other examples, multiple waste tapholes may be used to remove the waste metal simultaneously. All of the waste tapholes, or any subset of the waste tapholes, may be used to remove the waste metal simultaneously. If a subset of the waste tapholes is used, the subsets may be selected in an alternating manner or according to a taphole selection order. For instance, in an example furnace comprising four waste tapholes, the first and second tapholes may be used to remove waste metal simultaneously, followed, at a later time, by the third and fourth tapholes being used to simultaneously remove the waste metal.

More generally, the waste metal taphole or tapholes used to remove waste material may be varied between sequential tappings. For instance, the waste taphole(s) may be changed: after a predetermined number of tappings have been performed (e.g. after each tapping or after every 2, 3, 4 or 5 tappings); after a predetermined amount of time has elaspsed (e.g. every two weeks or every month); after a predetermined amount of waste metal has been removed from the furnace (e.g. after a predetermined volume or mass of waste metal has been removed since the previous change in taphole(s)); based on a detected or estimated wear of the tapholes (e.g. based on visual inspection or measurement of the taphole, for instance, using a visible light camera, or a thermal sensor or thermal camera, or based on the usage of the tapholes); or according to a predetermined taphole order (e.g. which states that each taphole is to be used for tapping sequentially).

In further examples, the furnaces and systems discussed above may form part of a larger system configured to manufacture man-made vitreous fibre (MMVF). As such, this large system may comprise a fiberiser configured to form fibres from the mineral melt produced by the furnace. The system may also comprise a melt handling device configured to transfer the mineral melt from the furnace to the fiberiser. Any suitable known fiberiser may be used.

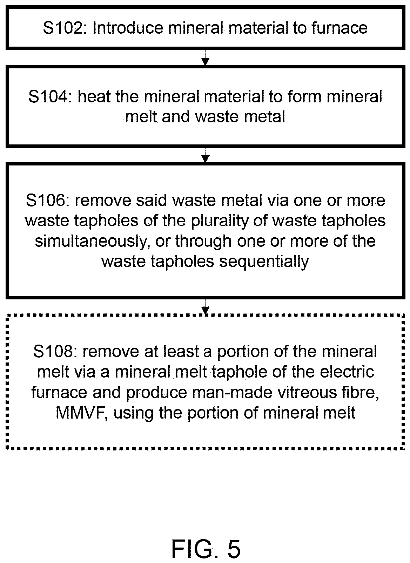

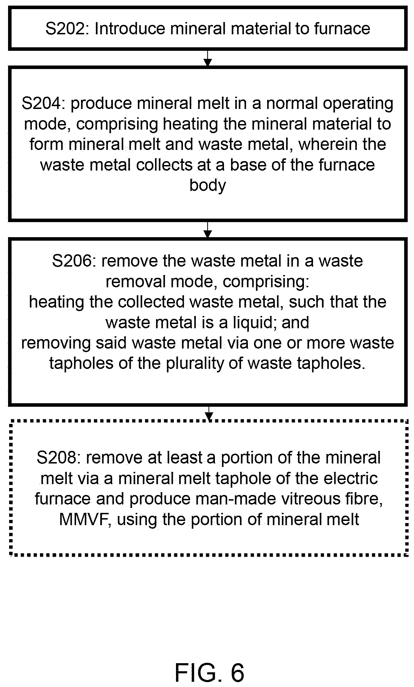

Methods according to the invention will now be discussed in more detail with reference to Figures 5 and 6.

Figure 5 depicts a schematic representation of an example process according to the present invention. This process may be performed using any of the furnaces described above.

Step S102 comprises the introduction of mineral material to the furnace. Specifically, mineral material suitable for forming man-made vitreous material (MMVF) is inserted into the cavity inside the furnace body. The mineral material preferably comprises stone, rock and/or slag.

In step S104, mineral melt is produced by heating the mineral material to form mineral melt and waste metal. The mineral material is heated using the electrodes, such that the mineral material melts and forms mineral melt and waste metal. The temperature of the furnace is set such that, as the waste metal sinks to the bottom of the furnace (due to the higher density of the waste metal as compared to the mineral melt) the waste metal cools and at least partially solidifies. The temperature of the furnace is modulated by supplying varying amounts of power to the electrodes, which are accordingly heating the mineral mixture by varying degrees.

In step S106, one or more of the waste tapholes are selected to be used to remove the waste metal. Preferably waste metal is removed in a series of separate or discrete tappings rather than continuously (although this is not essential). The taphole or tapholes used for tapping may be varied as discussed above. For example, the tapholes may be selected in alternating fashion-if a first taphole has been used to remove the waste metal most recently, the second taphole is selected now, etc. In other examples, as discussed above, the waste tapholes may be selected according to a predefined taphole order, or may be used simultaneously or in various combinations. The taphole may be sealed with mud, clay, or any other type of cap, cover or sealant. The waste metal then flows from the interior of the furnace out of the taphole, where it is collected. In other examples, the waste metal may need to be extracted, for instance, by pneumatic, hydraulic or mechanical means, or via the use of an oxygen lance.

Between steps S104 and S106 the method may involve changing the mode of operation of the furnace from a normal operation mode to a waste removal mode. These modes and preferable means through which the layout, operation and temperature distribution of the furnace can be modified to effect this change of mode are discussed above. Following tapping of waste metal in step S106, the mode of operation may be returned from the waste removal mode to the normal operation mode.

Figure 6 depicts a schematic representation of a modified version of the process described in Figure 5 involving the change of operation mode. This process may be performed using any of the furnaces described above. This method shares many of the features

Step S202 comprises the introduction of mineral material to the furnace, and is analogous to step S102 discussed above, with the same discussion applying equally here.

Step S204 comprises the production of mineral melt in a normal operating mode. This comprises, in this case, heating the mineral material to form mineral melt and waste metal, wherein the waste metal collects at a base of the furnace body. The normal operating mode, in this example, corresponds to the operation of the furnace to produce mineral melt. In this example, the temperature of the furnace in normal operating mode is set such that, as the waste metal sinks to the bottom of the furnace (due to the higher density of the waste metal as compared to the mineral melt) the waste metal cools and at least partially solidifies. The temperature of the furnace is modulated by supplying varying amounts of power to the electrodes, which are accordingly heating the mineral mixture by varying degrees. In other examples, the temperature of the furnace in the normal operating mode may be higher, such that the waste metal does not partially solidify.

Step S206 comprises the removal of the waste metal in a waste removal mode. This comprises heating the collected waste metal, such that the waste metal is a liquid; and removing said waste metal via one or more waste tapholes of the plurality of waste tapholes. In this example, as at least a portion of the waste metal is at least partially solid in the normal operating mode, the waste metal must be further heated, or "superheated", in the waste removal mode, as compared to the normal operating mode. Alternatively, if the waste metal is liquid in the normal operating mode, less or no extra heating may be applied in the waste removal mode.

Changing from the normal operating mode to the waste removal mode may comprise one or more of: increasing the power supplied to the electrode(s), such that they heat the mineral mixture more than in the normal operating mode; modifying the location of the electrodes (e.g. by lowering the electrodes into the body of the furnace, such that they are closer to the waste metal, and accordingly, raise the temperature of the waste metal) as discussed above. This process may liquify the solid waste metal into liquid waste metal, which may subsequently flow freely through one or more of the waste metal tapholes of a furnace. Of course, in other examples, the waste metal may be a liquid already and may be heated simply to decrease its resistance to flow, or, in some examples, may always be a liquid and not be further heated. Where changing from the normal operating mode to the waste removal mode is effected by increasing the power supplied to the electrode, the power supplied to the electrode(s) may be increased by a proportion between 5% to 50% and/or an amount between 0.5 megawatts and 5 megawatts. The difference in the temperature of the contents of the furnace (e.g. the temperature of the mineral melt or the waste metal) between the normal operating mode and the waste removal mode may be in the range from 50 to 300 degrees Celsius, and preferably in the range from 50 to 200 degrees Celsius.

The method may comprise moving the furnace from its normal operating mode to a waste removal mode when an amount of waste metal and/or mineral melt collected in the furnace is greater than a threshold, or moving from the normal operating mode to the waste removal mode after a predetermined time period. These figures may be determined empirically to ensure that waste metal is tapped off before it interferes with mineral melt discharged via a melt taphole of the furnace.

Following the removal of waste metal the furnace may be returned to its normal operating mode (e.g. by reversing the changes discussed above).

The change of operating mode for the furnace is preferably instructed automatically using a furnace controller as discussed above. However, alternative means may also be used.

The methods shown in Figures 5 and 6 preferably involve the optional step S108, S208 of removing at least a portion of the mineral melt via a mineral melt taphole of the electric furnace and producing man-made vitreous fibre, MMVF, using the portion of mineral melt. The MMVF may be manufactured using any suitable fiberiser. The mineral melt may be transferred from the furnace to the fiberiser using a mineral melt handling device. This optional step S108, S208 of removing mineral melt and producing MMVF may be performed simultaneously with or following either of the steps of producing the mineral melt (S104, S106) or removing the waste metal (S106, S206).

It should be understood that the benefits of using multiple tapholes, as discussed above, may be provided in addition to, or separately from, the benefits of operating the furnace in a normal operating mode and a waste removal mode. As such, there may be provided furnaces that comprise a single waste taphole, or one or more waste tapholes, that are configured to be operated in and change between the normal operating mode and waste removal mode as discussed above, and corresponding methods for operating said furnaces. These furnaces and methods may include any of the features and steps discussed above with reference to Figures 1 to 6 including the tapping of waste metal through said one or more waste tapholes. In particular, the methods discussed above with reference to Figures 5 and 6 may be performed using a furnace with a single waste taphole, with only change being that the single waste taphole is used each time waste metal is removed from the furnace.

## Claims

1. An electric furnace for melting mineral material to produce mineral melt suitable for forming man-made vitreous fibres (MMVF), the furnace comprising:
a furnace body, configured to receive mineral material; and
one or more electrodes configured to heat the mineral material to form a mineral melt and a waste metal;
wherein the furnace body comprises a plurality of waste tapholes for removing waste metal from within the furnace body, and one or more melt tapholes for removing mineral melt from within the furnace body; and
wherein the one or more melt tapholes are located above the waste tapholes relative to a base of the furnace body.

2. The electric furnace according to claim 1, wherein each of the waste tapholes are disposed in a side wall of the furnace body and are located at a substantially same height with respect to a base of the furnace body.

3. The electric furnace according to any one of the preceding claims, wherein the electrodes are adjustably coupled to the furnace body, such that the electrodes may be raised or lowered with respect to a base of the furnace body.

4. The electric furnace according to any one of the preceding claims, wherein a centreline of each waste taphole of the plurality of waste tapholes is located within an angular range of less than or equal to 120 degrees with respect to a central axis of the furnace body, preferably less than or equal to 90 degrees, more preferably less than or equal to 60 degrees.

5. The electric furnace according to any one of the preceding claims, wherein each of the one or more melt tapholes is located at least 0.1 metres above each waste taphole of the plurality of waste tapholes, with respect to a base of the furnace body, preferably 0.2 metres, more preferably at least 0.3 metres, more preferably 0.5 metres.

6. The electric furnace according to any one of the preceding claims, wherein:
each waste taphole is offset from each of the one or more electrodes relative to the centerline of the furnace; and/or
each waste taphole of the plurality of waste tapholes is located at least 20% of the radius of the furnace away from each electrode of the one or more electrodes, preferably at least 30%, more preferably at least 50%.

7. The electric furnace according to any one of the preceding claims, wherein said furnace is configured to produce mineral melt suitable for forming man-made vitreous fibres (MMVF) in a normal operating mode and to prepare the waste metal for removal in a waste removal mode;
wherein in the normal operating mode the furnace is configured to heat the mineral material to form mineral melt and waste metal from the mineral material, such that the waste metal collects at a base of the furnace body, and in the waste removal mode the furnace is configured to heat the collected waste metal to decrease the viscosity of the collected waste metal relative to the viscosity of the collected waste metal in the normal operating mode.

8. The electric furnace according to claim 7, wherein said furnace is further configured to:
move from the normal operating mode to the waste removal mode when an amount of waste metal and/or mineral melt collected in the furnace is greater than a threshold; and/or
move from the normal operating mode to the waste removal mode after a predetermined time period.

9. A method of operating an electric furnace according to claim 1 to produce mineral melt suitable for forming man-made vitreous fibres (MMVF), the method comprising:
introducing mineral material to the furnace;
heating the mineral material to form mineral melt and waste metal;
removing said waste metal, wherein said waste metal is removed through two or more waste tapholes of the plurality of waste tapholes simultaneously, or through two or more of the waste tapholes of the plurality of waste tapholes sequentially.

10. The method according to claim 9, wherein removing said waste metal comprises removing the waste metal in a series of separate tappings, wherein the waste taphole or waste tapholes used to remove waste metal are changed:
after a predetermined number of tappings have been performed;
after a predetermined amount of time has elaspsed;
after a predetermined amount of waste metal has been removed from the furnace;
according to a predetermined taphole order; and/or based on detected or estimated wear of the waste tapholes.

11. The method according to claim 9 or claim 10, further comprising:
producing mineral melt in a normal operating mode, comprising:
heating the mineral material to form mineral melt and waste metal, wherein the waste metal collects at a base of the furnace body; and
removing the waste metal in a waste removal mode, comprising:
heating the collected waste metal, such that the waste metal is a liquid; and
removing said waste metal via one or more waste tapholes of the plurality of waste tapholes.

12. The method according to claim 11, wherein, in the normal operating mode, the waste metal collects at the base of the furnace body in a solid state, and in the waste removal mode, heating the collected waste metal comprises heating the collected waste metal to liquify said waste metal such that it may be removed via a waste taphole of the plurality of waste tapholes.

13. The method according to claim 11 or claim 12, further comprising:
moving from the normal operating mode to a waste removal mode when an amount of waste metal and/or mineral melt collected in the furnace is greater than a threshold; or
moving from the normal operating mode to the waste removal mode after a predetermined time period.

14. The method according to claim 13, wherein moving from the normal operating mode to the waste removal mode comprises:
increasing a power supplied to the electrodes; and/or,
lowering the electrodes with respect to a base of the furnace body, such that the electrodes are positioned closer to the collected solid waste metal.

15. The method according to any of claims 9 to 14, further comprising:
removing at least a portion of the mineral melt via a mineral melt taphole of the electric furnace; and
producing man-made vitreous fibre, MMVF, using the portion of mineral melt.

## Amended claims

### Amended claims in accordance with Rule 137(2) EPC.

1. An electric furnace (10) for melting mineral material to produce mineral melt (106) suitable for forming man-made vitreous fibres, MMVF, the furnace comprising:
a furnace body (102), configured to receive mineral material; and
one or more electrodes (120) configured to heat the mineral material to form a mineral melt (106) and a waste metal (108);
wherein the furnace body (102) comprises a plurality of waste tapholes (110) for removing waste metal (108) from within the furnace body (102), and one or more melt tapholes (112) for removing mineral melt (106) from within the furnace body (102); and
wherein the one or more melt tapholes (112) are located above the waste tapholes (110) relative to a base of the furnace body (102);
further comprising a furnace controller (124) configured to change a mode of operation of the furnace from a normal operating mode to a waste removal mode and from the waste removal mode to the normal operating mode, the furnace configured to produce mineral melt (106) suitable for forming man-made vitreous fibres, MMVF, in the normal operating mode and to prepare waste metal (108) for removal in a waste removal mode;
wherein, in the normal operating mode, the furnace is configured to heat the mineral material to form mineral melt (106) and waste metal (108) from the mineral material, such that the waste metal (108) collects at a base of the furnace body (102); and
in the waste removal mode, the furnace is configured to heat the collected waste metal (108) to decrease the viscosity of the collected waste metal (108) relative to the viscosity of the collected waste metal (108) in the normal operating mode.

2. The electric furnace (10) according to claim 1, wherein each of the waste tapholes (110) are disposed in a side wall of the furnace body (102) and are located at a substantially same height with respect to a base of the furnace body (102).

3. The electric furnace (10) according to any one of the preceding claims, wherein the electrodes (120) are adjustably coupled to the furnace body (102), such that the electrodes (120) may be raised or lowered with respect to a base of the furnace body (102).

4. The electric furnace (10) according to any one of the preceding claims, wherein a centreline of each waste taphole of the plurality of waste tapholes (110) is located within an angular range of less than or equal to 120 degrees with respect to a central axis of the furnace body (102), preferably less than or equal to 90 degrees, more preferably less than or equal to 60 degrees.

5. The electric furnace (10) according to any one of the preceding claims, wherein each of the one or more melt tapholes (112) is located at least 0.1 metres above each waste taphole of the plurality of waste tapholes (110), with respect to a base of the furnace body (102), preferably 0.2 metres, more preferably at least 0.3 metres, more preferably 0.5 metres.

6. The electric furnace (10) according to any one of the preceding claims, wherein:
each waste taphole is offset from each of the one or more electrodes (120) relative to the centerline of the furnace; and/or
each waste taphole of the plurality of waste tapholes (110) is located at least 20% of the radius of the furnace away from each electrode of the one or more electrodes (120), preferably at least 30%, more preferably at least 50%.

7. The electric furnace (10) according to claim 1, wherein said furnace is further configured to:
move from the normal operating mode to the waste removal mode when an amount of waste metal (108) and/or mineral melt (106) collected in the furnace is greater than a threshold; and/or
move from the normal operating mode to the waste removal mode after a predetermined time period.

8. A method of operating an electric furnace (10) to produce mineral melt (106) suitable for forming man-made vitreous fibres, MMVF, the electric furnace (10) comprising:
a furnace body (102), configured to receive mineral material; and
one or more electrodes (120) configured to heat the mineral material to form a mineral melt (106) and a waste metal (108);
wherein the furnace body (102) comprises a plurality of waste tapholes (110) for removing waste metal (108) from within the furnace body (102), and one or more melt tapholes (112) for removing mineral melt (106) from within the furnace body (102); and
wherein the one or more melt tapholes (112) are located above the waste tapholes (110) relative to a base of the furnace body (102);
wherein the method comprises:
introducing mineral material to the furnace;
heating the mineral material to form mineral melt (106) and waste metal (108);
removing said waste metal (108), wherein said waste metal (108) is removed through two or more waste tapholes (110) of the plurality of waste tapholes (110) simultaneously, or through two or more of the waste tapholes (110) of the plurality of waste tapholes (110) sequentially;
the method further comprising:
producing mineral melt (106) in a normal operating mode, comprising:
heating the mineral material to form mineral melt (106) and waste metal (108), wherein the waste metal (108) collects at a base of the furnace body (102); and
removing the waste metal (108) in a waste removal mode, comprising:
heating the collected waste metal (108), such that the waste metal (108) is a liquid; and
removing said waste metal (108) via one or more waste tapholes (110) of the plurality of waste tapholes (110);
wherein, in the normal operating mode, the waste metal (108) collects at the base of the furnace body (102) in a solid state, and in the waste removal mode, heating the collected waste metal (108) comprises heating the collected waste metal (108) to liquify said waste metal (108) such that it may be removed via a waste taphole of the plurality of waste tapholes (110).

9. The method according to claim 8, wherein removing said waste metal (108) comprises removing the waste metal (108) in a series of separate tappings, wherein the waste taphole or waste tapholes (110) used to remove waste metal (108) are changed:
after a predetermined number of tappings have been performed;
after a predetermined amount of time has elapsed;
after a predetermined amount of waste metal (108) has been removed from the furnace;
according to a predetermined taphole order; and/or based on detected or estimated wear of the waste tapholes (110).

10. The method according to claim 8 or claim 9, further comprising:
moving from the normal operating mode to a waste removal mode when an amount of waste metal (108) and/or mineral melt (106) collected in the furnace is greater than a threshold; or
moving from the normal operating mode to the waste removal mode after a predetermined time period.

11. The method according to claim 10, wherein moving from the normal operating mode to the waste removal mode comprises:
increasing a power supplied to the electrodes (120); and/or,
lowering the electrodes (120) with respect to a base of the furnace body (102), such that the electrodes (120) are positioned closer to the collected solid waste metal (108).

12. The method according to any of claims 8 to 11, further comprising:
removing at least a portion of the mineral melt (106) via a mineral melt (106) taphole of the electric furnace (10); and
producing man-made vitreous fibre, MMVF, using the portion of mineral melt (106).
